# EUROPÄISCHE PATENTANMELDUNG

(11) **EP 2 856 917 A1**
(43) Veröffentlichungstag der Anmeldung: **08.04.2015**
(21) Anmeldenummer: 13186920.8
(22) Anmeldetag: 01.10.2013
(51) Int. Cl.: A47J 31/36

(54) **Brühmodul**

(71) Anmelder: Luna Technology Systems LTS GmbH, 8304 Wallisellen (CH)
(72) Erfinder: Rubin, Andreas, 8608 Bubikon (CH); Zwicker, Dominic, 9650 Nesslau (CH); Deuber, Louis, 8805 Richterswil (CH)
(74) Vertreter: Frei Patent Attorneys

(57) **Zusammenfassung**

Ein Brühmodul für ein Extraktionsgerät weist ein erstes Brühmodulteil (3) und ein relativ zu diesem bewegbares zweites Brühmodulteil (5) auf. Das erste und das zweite Brühmodulteil bilden eine Ausleitvorrichtung zum Ausleiten eines Extraktionsprodukts aus einer Kapsel mit Extraktionsgut für die Zubereitung von Brühgetränken und einen Injektor zum Einleiten einer Extraktionsflüssigkeit in die Kapsel. Das erste Brühmodulteil weist einen Kopf (30) mit seitlichen Führungsmitteln (31) auf, welche eine erste Bahn (33) und eine zweite Bahn (36) für einen Kapselkragen definieren. Das erste Brühmodulteil (3) bildet ferner eine Auflage (35), welche eine Bewegung der Kapsel nach unten begrenzt, wenn der Kapselkragen sich auf der ersten Bahn befindet. Sie seitlichen Führungsmittel (31) sind steif mit dem Kopf verbunden, und das zweite Brühmodulteil weist ein Rückholmittel (61) auf, welches dazu ausgebildet ist, beim Öffnen der Brühkammer am Kapselkragen (21) anzugreifen und diesen in die zweite Bahn (36) zu bewegen.

## Beschreibung

Die Erfindung betrifft Extraktionsgeräte zum Zubereiten von Getränken oder dergleichen aus einem in einer Kapsel enthaltenen Extraktionsgut, beispielsweise gemahlenem Kaffee. Sie betrifft insbesondere ein Brühmodul für ein Extraktionsgerät sowie ein Extraktionsgerät mit einem solchen Brühmodul.

Extraktionsgeräte zum Zubereiten von Getränken oder dergleichen aus einem in einer Portionsverpackung vorhandenen Extraktionsgut sind unter anderem als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel eingeworfen und die Brühkammer bspw. mittels eines Bedienhebels verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühkammerteile, die Brühflüssigkeit fliesst im Wesentlichen horizontal, und der Kapselbehälter ist unterhalb der Brühkammer ausgebildet.

Bei Brühmodulen dieser Art ist sicherzustellen, dass die eingeworfene Kapsel gehalten wird, bis die Brühkammer verschlossen ist, dass sie aber nach unten fällt, wenn die Brühkammer nach dem Brühprozess wieder geöffnet wird. Die WO 2008/014830 zeigt - für im Wesentlichen becherförmige Kapseln mit einem seitlich vorstehenden Kragen - einen möglichen Weg, wie das bewirkt werden kann. Das dort beschriebene Brühmodul weist seitliche Haltearme am einen Brühmodulteil auf. In den Haltearmen sind erste und zweite Führungsnuten ausgebildet. Beim Einwerfen wird der Kragen durch die ersten Führungsnuten beidseitig geführt, wobei diese ersten Führungsnuten nach unten eine Begrenzung aufweisen, durch welche die eingeworfene Kapsel gestoppt wird. Beim Verschliessen der Brühkammer werden die Haltearme zur Seite hin weggeschwenkt, so dass ihre Verbindung zum Kapselkragen ganz gelöst wird. Die Kapsel wird in diesem Zustand gehalten, indem sie in einer becherartigen Ausbildung des anderen Brühmodulteils gehalten. Beim erneuten Öffnen der Brühkammer werden die Haltearme zurück nach innen verschwenkt, gelangen erneut in Eingriff mit der Kapsel und wirken als Rücknahmemittel, indem eine Rücknahmenase den Kapselkragen in die zweiten Führungsnuten bewegt. Diese sind nach unten offen, so dass die Kapsel nach unten fällt, sobald die Brühkammer vollständig geöffnet ist.

Diese Lösung bedingt, dass ein relativ ausgeprägter seitlicher Kragen vorhanden ist. Ausserdem ist sie relativ aufwändig zu realisieren.

Die EP 2 105 074 zeigt ein Brühmodul mit einer Positioniereinheit, welche ebenfalls mit dem einen Brühmodulteil verbundene und mitbewegte Haltebacken mit Führungsnuten aufweist, durch welche der Kapselkragen beim Einwerfen seitlich geführt wird. Die Führungsnuten bilden dabei einen Führungskanal, welcher nach unten verjüngend und am unteren Ende klemmend ausgebildet ist. Beim Verschliessen der Brühkammer stösst der Kragen an einem Halterand des anderen Brühmodulteils an und wird als Folge davon umgebogen oder umgeknickt und so von den Führungsnuten gelöst. Eine Hinterschneidung der Haltebacken unterstützt beim Öffnen der Brühkammer nach dem Brühvorgang das Auswerfen der Kapsel.

Auch diese Lösung bedingt einen relativ ausgeprägten seitlichen Kragen, der ausserdem - in eine axiale Richtung - verformbar sein muss. Sie ist daher nicht für alle Kapselsorten geeignet.

Ausgehend vom Stand der Technik stellt sich der Erfindung die Aufgabe, ein Brühmodul für ein Extraktionsgerät, beispielsweise eine Kaffeemaschine, zum portionenweisen Zubereiten eines Getränkes oder anderen Extraktionsprodukts aus einem in einer Kapsel verpackten Extraktionsgut, zur Verfügung zu stellen, das Nachteile bestehender Brühmodule überwindet und das eine einfache und kompakte Bauweise sowie eine grosse Flexibilität beim Kapseldesign ermöglicht. Das Brühmodul sollte insbesondere für einen horizontalen Einbau und vorzugsweise auch für grosse Brühdrücke von über 10 bar, bspw. bis 20 bar, geeignet sein, wobei auch deutlich niedrigere Brühdrücke von bpsw. ca. 1 bar nicht ausgeschlossen sind.

Gemäss einem ersten Aspekt weist das Brühmodul ein erstes Brühmodulteil und ein relativ zu diesem bewegbares zweites Brühmodulteil auf, wobei das erste und das zweite Brühmodulteil eine Ausleitvorrichtung zum Ausleiten eines Extraktionsprodukts aus der Kapsel und einen Injektor zum Einleiten einer Extraktionsflüssigkeit in die Kapsel bilden - beispielsweise ist das erste Brühmodulteil die Ausleitvorrichtung und das zweite Brühmodulteil der Injektor - oder umgekehrt. In einer geschlossenen Stellung (das erste und zweite Brühmodulteil sind bspw. "zusammen") wird eine Brühkammer geschlossen, welche die Kapsel beim Brühvorgang mindestens teilweise umgibt.

Zum Öffnen und Verschliessen der Brühkammer kann das zweite Brühmodulteil relativ zum ersten Brühmodulteil linear entlang einer axialen Richtung - d.h. translatorisch bzw. im Wesentlichen translatorisch - bewegbar sein. Eine Schwenkbewegung der Brühmodulteile relativ zueinander ist nicht ausgeschlossen, aber im Allgemeinen unnötig. Insbesondere wird in Ausführungsformen die Kapsel beim Verschliessen der Brühkammer nicht aktiv verschwenkt. Es kann auch vorgesehen sein, dass die Kapsel beim Verschliessen auch nicht verkippt, d.h. die Orientierung der Kapsel bleibt beim Verschliessen der Brühkammer im Wesentlichen erhalten.

Das erste Brühmodulteil weist einen Kopf mit seitlichen (Kapsel-)Führungsmitteln auf. Diese sind am Kopf befestigt und mit diesem verbunden. Die seitlichen Führungsmittel definieren eine im Wesentlichen vertikale erste Bahn für einen Kapselkragen, welcher bspw. durch eine Schweissnaht oder dergleichen gebildet sein kann. Die Führungsmittel weisen je ein in einem oberen Bereich der ersten Bahn eine äussere Rückhaltestruktur auf, die einem Bewegen des Kragens aus der ersten Bahn nach innen entgegenstehen. Ausserdem bildet das erste Brühmodulteil eine Auflage aus, welche in Einwurfrichtung unterhalb der Bahn ausgebildet ist und ein Fallen der Kapsel nach unten verhindert, wenn der Kapselkragen entlang der ersten Bahn geführt ist. Die erste Bahn kann bspw. durch eine erste Führungsnut gebildet sein. Die Auflage kann durch eine Begrenzung der ersten Führungsnut - oder allgemein der ersten Bahn - gegen unten gebildet sein.

In diesem Text beziehen sich generell die Begriffe "innen" und "aussen" auf axiale Richtungen hin zur Mitte der Brühkammer bzw. davon weg. Axiale Richtungen sind Richtungen entlang der im Wesentlichen horizontalen Achse Injektor-Ausleitvorrichtung, welche auch einer Kapselachse entsprechen kann. Auf bezüglich dieser Achse radial-horizontale Richtungen wird durch die Begriffe "radial-innen" und "radial-aussen" Bezug genommen. "Oben" und "Unten" bezeichnen die entsprechenden vertikalen Richtungen bei einer bestimmungsgemässen Verwendung des Brühmoduls, bei welcher die Kaffeemaschine mit dem Brühmodul auf einer horizontalen Oberfläche abgestellt ist.

Der Kapselkragen kann beispielsweise ein konventioneller, ausgeprägter und auf der Ebene einer der Endflächen abstehender umlaufender Kragen sein. Er kann jedoch auch gemäss einer alternativen Kapselform weniger ausgeprägt sein und bspw. als umlaufender Schweissrand/Schweissbraue ausgebildet sein, bspw. wie er von Kapseln gemäss WO 2010/118543 bekannt ist.

Das zweite Brühmodulteil weist Rückholmittel auf, welche beim Öffnen der Brühkammer (d.h. beim Auseinanderbewegen des ersten und zweiten Brühmodulteils) am Kragen angreifen um diesen durch die Öffnungsbewegung in die zweite Bahn zu bewegen.

Die seitlichen Führungsmittel können beispielsweise fest und steif, d.h. im Wesentlichen relativ zum Kopf unbeweglich mit diesem verbunden sein. Das kann herstellungs- und wartungstechnisch besonders günstig sein. Dabei bleiben die seitlichen Führungsmittel beispielsweise während des ganzen Prozesses seitlich in Bezug auf den Kopf unbeweglich. Auch während des Brühprozesses verbleiben die seitlichen Führungsmittel zum Beispiel im Kontakt mit der Kapsel. Beim Verschieben aus der ersten Bahn und gegebenenfalls über die erste Bahn hinweg in die zweite Bahn wird dann die Kapsel leicht deformiert, bspw. durch radiale Deformation. Insbesondere kann der bspw. in sich formsteife Kragen quasi leicht nach radial-innen weggedrückt werden.

Es ist aber auch möglich, dass die seitlichen Führungsmittel entgegen einer Federkraft (ein wenig) nach aussen auslenkbar sind. Dann kann beim Verschieben der Kapsel relativ zu den seitlichen Führungsmitteln anstelle einer Kapsel oder ergänzend dazu eine Auslenkung der seitlichen Führungsmittel treten.

Ergänzend oder alternativ können auch die Rückholmittel während des Brühprozesses mit der Kapsel in Eingriff bleiben. So kann sich der Kapselkragen beispielsweise während des Brühprozesses in einer von den Rückholmitteln gebildeten Aufnahme befinden, in welcher er während des Anschliessenden Öffnens der Brühkammer auch mitbewegt wird, bis er in die zweite Bahn gelangt ist.

Wie die seitlichen Führungsmittel können auch die Rückholmittel seitlich nicht bewegbar sondern fest an einem Gehäuse des zweiten Brühmodulteils vorhanden sein. Es ist jedoch - unabhängig von einer möglichen Auslenkbarkeit der seitlichen Führungsmittel - möglich, dass die Rückholmittel radial entgegen einer Federkraft auslenkbar sind.

Die Führungsmittel können bspw. beidseitig der Kapsel gabelartig angeordnet sein und je eine Aufnahme für den Kapselkragen aufweisen. Die seitlichen Führungsmittel weisen dann bspw. je zwei Führungsmittelteile auf, zwischen welche die Rückholmittel bei verschlossener Brühkammer eingreifen, und/oder die Rückholmittel greifen von oben und unten an der Kapsel an.

In einer Ausführung mit die Kapsel vollständig umschliessender Brühkammer ist durch die umschliessenden Elemente des ersten und zweiten Brühmodulteils - bspw. ggf. inklusive Dichtung - ein Brühkammerinneres definiert. Die seitlichen Führungsmittel und/oder die Rückholmittel befinden sich dann bei geschlossener Brühkammer im Brühkammerinneren - ebenso wie eine gegebenenfalls vorhandene Kapseldichtung.

Dieser Ansatz unterscheidet sich vom Stand der Technik, gemäss welchem die Mittel, welche die Kapsel nach dem Einwurf in einer Zwischenposition gehalten wird, beim Schliessen der Brühkammer entfernt werden müssen, bspw. durch eine Schwenkbewegung nach aussen oder nach unten. Der erfindungsgemässe Ansatz ermöglicht also eine Konstruktion mit einem Minimum an beweglichen Teilen, was sowohl in Bezug auf Verlässlichkeit als auch in Bezug auf Herstellungskosten günstig ist.

Beim Schliessen der Brühkammer kann der Kapselkragen aus der ersten Bahn durch das zweite Brühmodulteil nach aussen, d.h. zum Kopf des ersten Brühmodulteils hin bewegt werden. In dieser Brühposition ist die Kapsel - schon vor dem Brühprozess oder durch den während des Brühprozesses in der Kapsel aufgebauten Innendruck bewirkt - von Perforationselementen des ersten Brühmodulteils angestochen. Aus dieser Brühposition wird dann beim Öffnen die Kapsel durch die Rückholmittel herausgezogen bis der Kragen zur zweiten Bahn gelangt ist. Von dort aus kann die Kapsel dann nach unten in einen Kapselbehälter fallen.

Es kann insbesondere vorgesehen sein, dass die zweite Bahn in Bezug auf die Brühkammer weiter innen - d.h. näher bei der Seite des zweiten Brühmodulteilsangeordnet ist als die erste Bahn. Dann wird der Kapselkragen unter Umständen während des Öffnens der Brühkammer aus der Brühposition über die erste Bahn hinweg in die zweite Bahn gezogen.

Innenseitig der zweiten Bahn ist bspw. eine zweite Rückhaltestruktur vorhanden, welche den Kapselkragen während der Öffnungsbewegung zurückhält, sobald dieser in der zweiten Bahn angekommen ist. Die Rückhaltekraft dieser ist dann grösser als die entsprechende Kraft der Rückholmittel, so dass der Kragen beim weiteren Öffnen aus der Aufnahme der Rückholmittel hinaus gelangt. Dies kann bspw. dadurch bewirkt sein, dass diese Rückhaltestruktur weiter nach radial-innen ragt, einen steileren Winkel zur Achse bildet und/oder ausgedehnter ist. Zusätzlich oder alternativ dazu kann auch vorgesehen sein, dass die Rückholmittel in der Mitte (bezüglich der Vertikalen) des Kapselkragens angreifen, wohingegen die zweite Rückhaltestruktur oberhalb und unterhalb angreift. Bei einer im Wesentlichen würfel- oder quaderförmigen Kapsel bedeutet das, dass die Rückhaltestruktur näher bei den Ecken und Kanten der Kapsel angreift, wo diese einer Verformung mehr Widerstand entgegenbringt, als die Rückholmittel.

Die Ausleitvorrichtung und der Injektor sind vorzugsweise einander gegenüberliegend angeordnet und weisen beispielsweise eine extraktionsseitige Anstechvorrichtung mit mindestens einem in die Brühkammer hinein abstehenden Perforationselement bzw. eine injektionsseitige Anstechvorrichtung, ebenfalls mit mindestens einem in die Brühkammer hinein abstehenden Perforationselement auf. Die Perforationselemente sind bspw. zum Anstechen von tiefgezogenen Kunststoff-Kapselwandungen, bspw. aus Polypropylen mit bspw. einer Dicke von zwischen 0.2 mm und 0.5 mm oder 0.4 mm, bspw. zwischen 0.25 mm und 0.35 mm ausgebildet; als solche unterscheiden sie sich unter Umständen von Mitteln zum Perforieren von Aluminiumkapseln. Auch Anstechvorrichtungen für andere Kapselwandungsmaterialien als tiefgezogene Kunststoffe können jedoch vorhanden sein.

Der Injektor des Brühmoduls weist in Ausführungsformen eine Kapseldichtung auf, welche die Kapsel entlang einer umlaufenden Mantelfläche umgreift. Die Kapseldichtung kann insbesondere eine - einzige - Dichtungslippe aufweisen, welche zum Ort der Flüssigkeitsinjektion hin ragend ausgebildet ist. Als Option kann im Injektor ein Anströmkanal vorhanden sein welcher injiziertes Brühwasser schon vor Beginn des Brühprozesses zur Kapseldichtung hin lenkt und die Dichtung - insbesondere die Dichtungslippe - gegen die Mantelfläche drücken lässt.

Eine Kapseldichtung kann auch - wie bspw. in WO 2012/045184 beschrieben - das Halten und Positionieren der Kapsel in der abgeschlossenen Brühkammer bewirken. Das Halten der Kapsel in der Brühkammer durch eine umlaufende Dichtung hat unter anderem den Vorteil von grösseren Fertigungstoleranzen, d.h. die Elastizität der Kapseldichtung kann Ungenauigkeiten in der relativen Positionierung von erstem und zweitem Brühmodulteil aufnehmen.

Auch extraktionsseitig (auf Seite der Ausleitvorrichtung) kann optional eine Dichtung vorhanden sein. Gemäss einer Alternative wird die Abdichtung der Kapsel jedoch nicht durch eine solche zusätzliche Dichtung, sondern durch die Dichtwirkung der gegen eine nichtelastische Dichtfläche gedrückten Kapselwand bewirkt. Die Dichtfläche kann dabei eine gekrümmte oder auch ebene Fläche sein, und die Dichtwirkung durch eine Verformbarkeit der während des Brühverfahrens heissen Kapselwand unterstützt sein.

Ein weiteres optionales Merkmal betrifft die Mechanik zum Bewegen des zweiten Brühmodulteils relativ zum ersten Brühmodulteil (die Relativbewegung kann ein Bewegen des zweiten Brühmodulteils und/oder des ersten Brühmodulteils relativ zu einem ortsfesten Gehäuse beinhalten). Gemäss einer Ausführungsform wird eine auslösende Bewegung - bspw. eines Bedienhebels oder auch eines elektrischen Antriebs, jeweils mit oder ohne Getriebeüber- oder -untersetzung - auf einen Kniehebel übertragen, wobei ein Kniegelenk des Kniehebels beim Schliessen überdrückt wird, d.h. sich im geschlossenen Zustand des Brühmoduls auf einer anderen Seite derjenigen Ebene befindet, welche durch die jeweils äusseren Drehachsen der Arme des Kniehebels definiert wird, als im offenen Zustand des Brühmoduls.

Ein solches Überdrücken - im geschlossenen Zustand des Brühmoduls gegen einen Anschlag - hat eine selbsthemmende Wirkung: durch den während des Brühprozesses entstehenden Innendruck werden die Brühmodulteile auseinandergepresst, wodurch der Kniehebel noch mehr gegen den Anschlag gedrückt wird - die Brühkammer kann sich nicht selbsttätig öffnen.

Diese optionalen Merkmale (Lippendichtung mit Anströmkanal; extraktionsseitiges Abdichten durch nicht-elastische Dichtfläche; überdrückter Kniehebel) wirken - je für sich oder in Kombinationen - besonders günstig mit dem vorstehend beschriebenen Konzept zusammen. Sie sind jedoch an sich auch - ebenfalls je für sich oder in Kombinationen - in anderen Brühmodulen für ein Extraktionsgerät einsetzbar, welche ein erstes Brühmodulteil und ein relativ zu diesem bewegbares zweites Brühmodulteil aufweisen, wobei das erste und das zweite Brühmodulteil eine Ausleitvorrichtung zum Ausleiten eines Extraktionsprodukts aus einer Kapsel mit Extraktionsgut für die Zubereitung von Brühgetränken und einen Injektor zum Einleiten einer Extraktionsflüssigkeit in die Kapsel bilden.

Gemäss einer speziellen Ausführungsform ist bspw. die Brühkammer für die Aufnahme einer im sich Gegensatz zum Stand der Technik nicht zur Ausleit- oder Injektorseite konisch verbreiternden Kapsel sondern einer bspw. würfelförmigen oder quaderförmigen Kapsel ausgebildet. Unter quader- bzw. würfelförmig versteht man hier eine Form, die von der geometrisch exakten Quader- bzw. Würfelform nicht so weit abweichen, dass sie funktionell sehr verschieden wären; bspw. ist die Form eines Pyramidenstumpfs mit rechteckiger bzw. quadratischer Grundfläche, wobei die an die Grundfläche angrenzenden Seitenflächen gegenüber der Senkrechten zur Grundfläche um nur einen kleinen Neigungswinkel α von bspw. höchstens 2° mit eingeschlossen. Die Quader- bzw. Würfelform kann einen umlaufenden Kragen - bspw. in Form eines Schweissrandes/einer Schweissbraue - aufweisen, der bspw. maximal 1.5 mm seitlich hervorsteht und bspw. von einer Endflächen-Ebene abgesetzt ist.

Das Brühmodul ist wie bereits erwähnt als horizontales Brühmodul ausgebildet. Das schliesst jedoch nicht aus, dass das Brühmodul als Ganzes leicht verkippt angeordnet sein kann, bspw. kann sie zum ersten Brühmodulteil hin nach unten abschüssig sein. Die Neigung der Achse Injektor-Ausleitvorrichtung zur Horizontalen hin beträgt dann vorzugsweise höchstens 15°, insbesondere zwischen 0° und 10°.

In Ausführungsformen umschliesst die Brühkammer die Kapsel vollständig, d.h. das erste Brühmodulteil und das zweite Brühmodulteil weisen Elemente auf, die passgenau einander entsprechen und in der geschlossenen Stellung zusammen die Brühkammer bilden. Die vom ersten Brühmodulteil gebildeten Wandungsteile und die vom zweiten Brühmodulteil gebildeten Wandungsteile können in der geschlossenen Position gegeneinander abgedichtet sein, bspw. durch eine umlaufende Verschlussdichtung. Diese Verschlussdichtung kann bspw. eine Lippendichtung aufweisen, welche an einem der Brühmodulteile befestigt ist und beim Verschliessen der Brühkammer gegen eine Fläche des anderen Brühmodulteils anstösst. Eine dergestalt abgeschlossene Brühkammer ermöglicht ein Spülen des Extraktionsgeräts bzw. des Brühmoduls, ohne dass eine Kapsel eingelegt werden müsste - was für den Benutzer ein markanter Vorteil ist. Dies schliesst jedoch die Verwendung einer Spül- oder Platzhalterkapsel während des Spül- oder Reinigungsvorgangs - mit abgeschlossener oder nicht vollständig abgeschlossener Brühkammer - nicht aus.

Durch eine solche Verschlussdichtung kann die Brühkammer zweistufig abgedichtet sein. Eine erste Dichtungsstufe wird durch mindestens eine Kapseldichtung gebildet, welche die Kapsel umgreift und verhindern, dass die eingeleitete Extraktionsflüssigkeit bzw. das ausgeleitete Extraktionsprodukt an der Kapsel vorbei fliessen. Diese erste Dichtungsstufe dichtet die Kapsel gegen den Injektor bzw. gegen die Ausleitvorrichtung ab. Als zweite Dichtungsstufe dichtet die Verschlussdichtung die Brühmodulteile gegeneinander ab. Sie kann einerseits der ergänzenden Abdichtung während des Brühvorgangs dienen. Andererseits kann sie wie erwähnt dem Abdichten während eines Spülvorgangs dienen.

Zusätzlich Gegenstand der Erfindung ist ein Verfahren zum Brühen eines Brühgetränks unter Verwendung einer Kapsel. Dieses wird bspw. mit einem Brühmodul bzw. einem Extraktionsgerät der vorstehend beschriebenen Art durchgeführt und kann die die Schritte umfassen:
- Einwerfen einer Portionenkapsel mit einem Extraktionsgut, bspw. durch eine positionierende Einwurföffnung, so, dass ein Kragen der Kapsel auf der ersten Bahn positioniert wird und dass die Kapsel auf der Auflage aufliegt;
- Verschliessen der Brühkammer durch Bewegen des zweiten Brühmodulteils relativ zum ersten Brühmodulteil, derart, dass die Kapsel mindestens durch ein Perforationselement eines durch das erste und/oder das zweite Brühmodulteil gebildeten Injektors angestochen wird, wodurch Einleitöffnungen in der Kapsel entstehen;
- Einleiten einer Extraktionsflüssigkeit in die Kapsel durch die Einleitöffnungen (bspw. von heissem Wasser unter Gebrauch einer Pumpe und optional eines Ventils);
- Ausleiten der Extraktionsflüssigkeit aus der Kapsel durch Ausleitöffnungen, die von Perforationselementen einer durch das erste und/oder das zweite Brühmodulteil gebildeten Ausleitvorrichtung erzeugt wurden;
- Anschliessend an das Ausleiten, Öffnen der Brühkammer durch Bewegen des zweiten Brühmodulteils relativ zum ersten Brühmodulteil, wodurch die Kapsel durch die Rückholelemente vom ersten Brühmodulteil weg gezogen wird, bis der Kragen entlang der zweiten Bahn positioniert ist und Fortsetzen des Öffnungsprozesses bis die Kapsel aus der geöffneten Brühkammer nach unten fällt.

Weiter Gegenstand der Erfindung ist ein Extraktionsgerät, insbesondere eine Getränkezubereitungsmaschine, bspw. Kaffeemaschine oder Teemaschine, mit einem Wassertank oder Wasseranschluss, einem Wassererhitzer, einer Wasserpumpe und einem Brühmodul der beschriebenen Art, wobei Wassertank, Wassererhitzer und Wasserpumpe so an das Brühmodul angeschlossen sind, dass von der Pumpe gefördertes erhitztes Wasser durch den Injektor in die Kapsel einleitbar ist.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen zeigen teilweise einander entsprechende Elemente von Figur zu Figur in unterschiedlichen Massstäben. Es zeigen:
- Figur 1 eine Ansicht eines erfindungsgemässen Brühmoduls;
- Figur 2 eine Schnittdarstellung des Brühmoduls;
- Figur 3 eine Ansicht von Teilen der Verschliessmechanik des Brühmoduls;
- Figur 4 ein Detail zu Figur 3, welches auch einen Mikroschalter zeigt;
- Figur 5 eine Ansicht des Injektors und der relativ zu dieser wie in der geöffneten Stellung der Brühkammer positionierten Ausleitvorrichtung;
- Figuren 6 und 7 je eine weitere Ansicht der Ausleitvorrichtung;
- Figur 8 eine Schnittdarstellung der Kapsel und von Teilen der Ausleitvorrichtung nach dem Einwurf der Kapsel und vor dem Verschliessen der Brühkammer - entlang einer horizontalen Ebene unterhalb der Kapselmitte geschnitten dargestellt;
- Figur 9 eine Schnittdarstellung von Teilen der Kapsel, der Ausleitvorrichtung und des Injektors während des Verschliessens der Brühkammer - entlang einer horizontalen Ebene in der Kapselmitte geschnitten dargestellt;
- Figuren 10, 11 und 12 je eine zu Figur 9 analoge Darstellung der Anordnung während verschiedener Stadien des Öffnens der Brühkammer dargestellt;
- Figur 13 ein Detail des Brühmoduls mit geöffneter Brühkammer;
- Figur 14 in einer Schnittdarstellung ein Detail des Injektors; und
- Figuren 15 und 16 je eine Schnittdarstellung der Ausleitvorrichtung

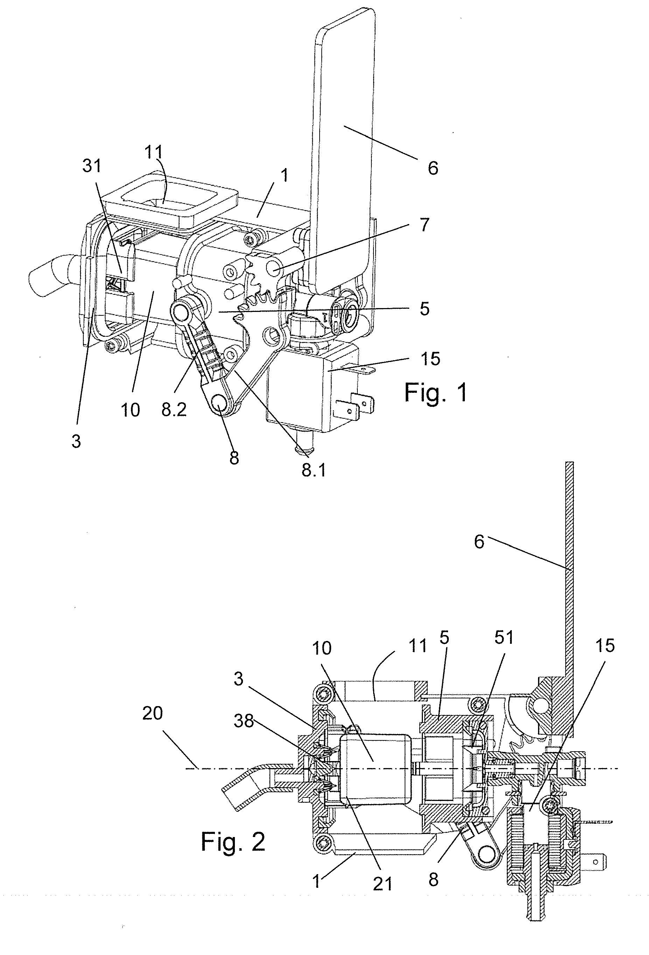

Das Brühmodul gemäss **Figuren 1 und 2** weist ein Brühmodulgehäuse 1 und durch das Gehäuse gehalten bzw. geführt eine Ausleitvorrichtung 3 als erstes Brühmodulteil und einen Injektor 5 als zweites Brühmodulteil auf. Durch einen Bedienhebel 6 ist der Injektor 5 zwischen einer Offenstellung, in welcher die Brühkammer offen und der Bedienhebel oben ist und einer Schliessstellung, in welcher die Brühkammer geschlossen und der Bedienhebel nach unten geklappt ist, relativ zum Gehäuse und zum ersten Brühmodulteil bewegbar. Figuren 1 und 2 zeigen das Brühmodul in der Offenstellung und mit eingeworfener Kapsel 10. Für den Einwurf der Kapsel 10 ist eine Einwurföffnung 11 vorhanden, welche auch die Orientierung der Kapsel beim Einwurf vorgibt. Die Einwurföffnung zeigt durch Andeuten der Position des Kapselkragens 21 auch die zu wählende Orientierung der Kapsel an.

An der Ausleitvorrichtung sind seitliche Führungsmittel 31 - als Führungs-Backen ausgeformt -vorhanden, deren Funktion nachstehend noch eingehender beschrieben wird.

Die Umsetzung der Hebel-Kippbewegung (der Bedienhebel 6 ist um eine durch Drehzapfen 7 definierte Achse schwenkbar) in eine Translationsbewegung des Injektors 5 ist ein Kniehebel 8 vorhanden. Ein am Hebel drehfest befestigter Verschlusskopf 9 ist zu diesem Zweck mit einem der Arme 8.1 des Kniehebels verzahnt.

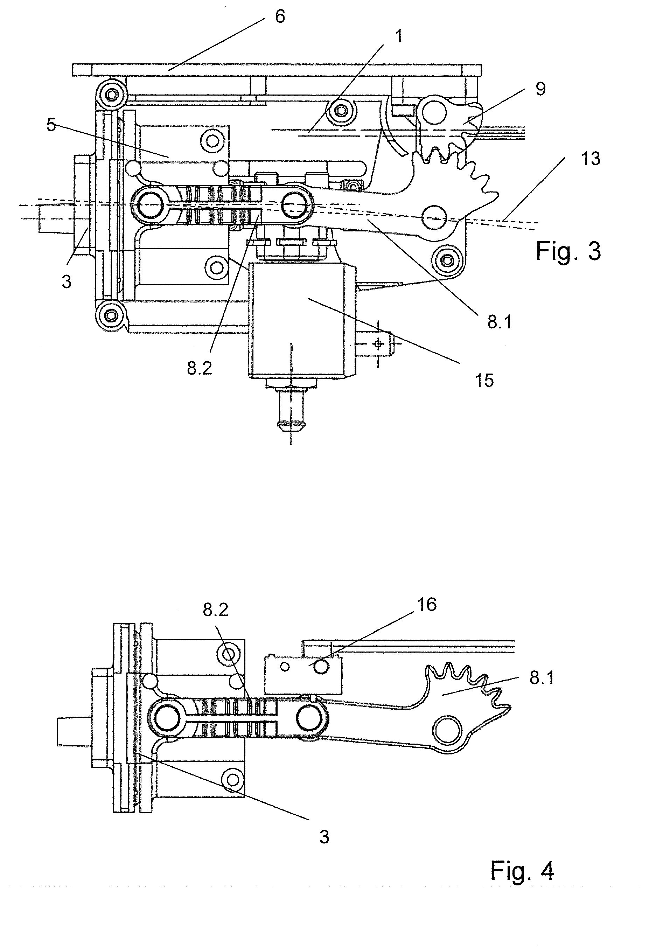

Wie in **Figur 3** besonders gut sichtbar ist der Kniehebel so ausgebildet, dass er ein selbsthemmendes System bildet, indem der Kniehebel im geschlossenen Zustand des Brühmoduls, wenn der Bedienhebel 6 am Anschlag ist, um wenige Grad überdrückt ist, d.h. Kniegelenk ist, wenn der Bedienhebel 6 am unteren Anschlag ist, auf der anderen Seite derjenigen Ebene 13, welche durch die jeweils äusseren Drehachsen der Arme 8.1, 8.2 definiert wird, als im offenen Zustand des Brühmoduls. Daher wird bei einem Auseinanderdrücken der beiden Brühmodulteile während des Brühvorgangs der Kniehebel gegen einen Anschlag im Gehäuse gedrückt und kann sich nicht selbständig öffnen.

Es kann noch, was in **Figur 4** dargestellt ist, ein Mikroschalter 16 vorhanden sein, welcher durch das Drücken des Kniehebels an den Anschlag betätigt wird und bspw. gleich selbst den Anschlag bilden kann. Der Mikroschalter 16 welcher kontrolliert, dass gewisse Vorgänge - insbesondere der Brühprozess selbst - nur bei geschlossener Brühkammer stattfinden können.

Auch alternative Anordnungen eines solchen Mikroschalters, in denen dieser jeweils den Schliesszustand der Brühkammer abfragt, sind möglich.

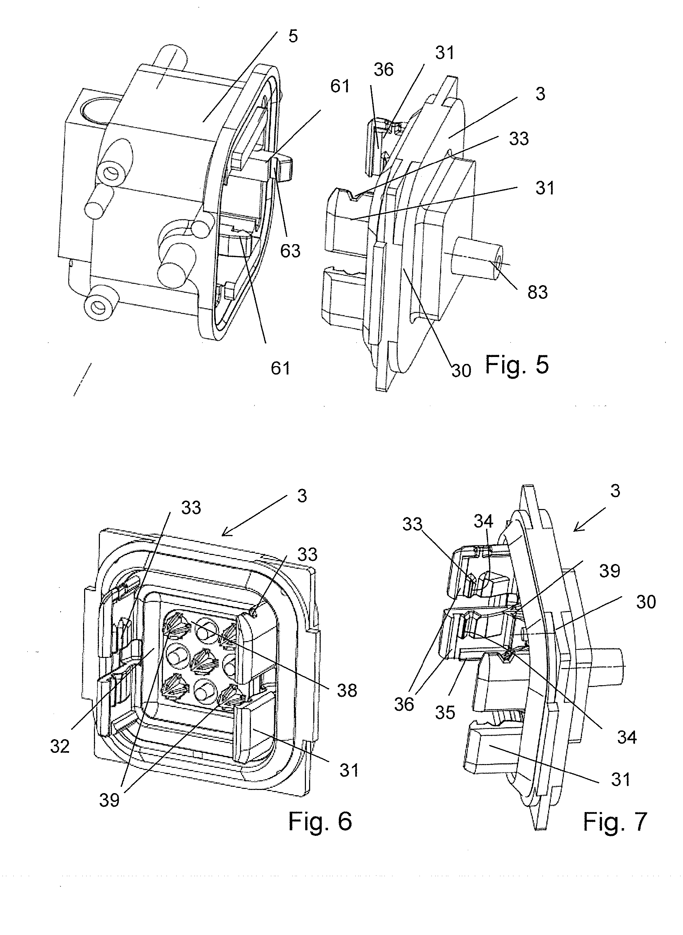

**Figur 5** zeigt - in einer im Vergleich zu den vorstehend beschriebenen Figuren anderen Orientierung - den Injektor und die Ausleitvorrichtung. **Figuren 6 und 7** zeigen weitere Ansichten der Ausleitvorrichtung 3.

Die seitlichen Führungsbacken 31 ragen vom Kopf 30 der Ausleitvorrichtung 3 in Richtung Injektor (d.h. nach innen gemäss der hier verwendeten Terminologie). Im dargestellten Beispiel sind sie je in ein oberes und unteres seitliche Führungsbackenteil mit einer Unterbrechung dazwischen aufgeteilt. Durch die seitlichen Führungsbacken 31 sind eine äussere Bahn 33 und eine innere Bahn 36 definiert. Die äussere und innere Bahn sind jeweils durch nutartige Strukturen definiert, welche zur Führung des Kragens 21 der Kapsel (im dargestellten Ausführungsbeispiel wird der Kragen 21 durch einen umlaufenden Schweissrand gebildet) ausgebildet sind, wobei die Bahnen so dimensioniert sind, dass der Kragen der Kapsel noch Spiel hat und also nicht geklemmt wird. Die äussere Führungsbahn ist so relativ zur Einwurföffnung 11 positioniert, dass der Kragen 21 der bei offener Brühkammer eingeworfenen Kapsel in die äussere Bahn 33 gelangt. Unterseitig der äusseren Bahn 33 ist eine Auflage 35 ausgebildet, auf welcher der Kragen 21 und/oder eine andere Partie der Kapsel 10 zu liegen kommt, wenn diese eingeworfen wird. Die innere Bahn 36, hingegen, ist gegen unten offen.

In einer zur dargestellten Ausführungsform alternativen Ausführung können auch die beiden Nuten gegeneinander vertauscht sein - d.h. die erste Bahn liegt dann weiter aussen als die zweite Bahn.

In einer zur gezeichneten Ausführungsform alternativen Ausführungsform können die Rückholelemente 61 auch anstatt zwischen den Führungsbackenteilen 31 seitlich einzugreifen von oben und von unten eingreifen. In einer solchen Konfiguration sind also bspw. in Fig. 5 die inneren, im inneren der Brühkammer angeordneten Teile des Injektors um 90° um die Brühkammerachse gedreht.

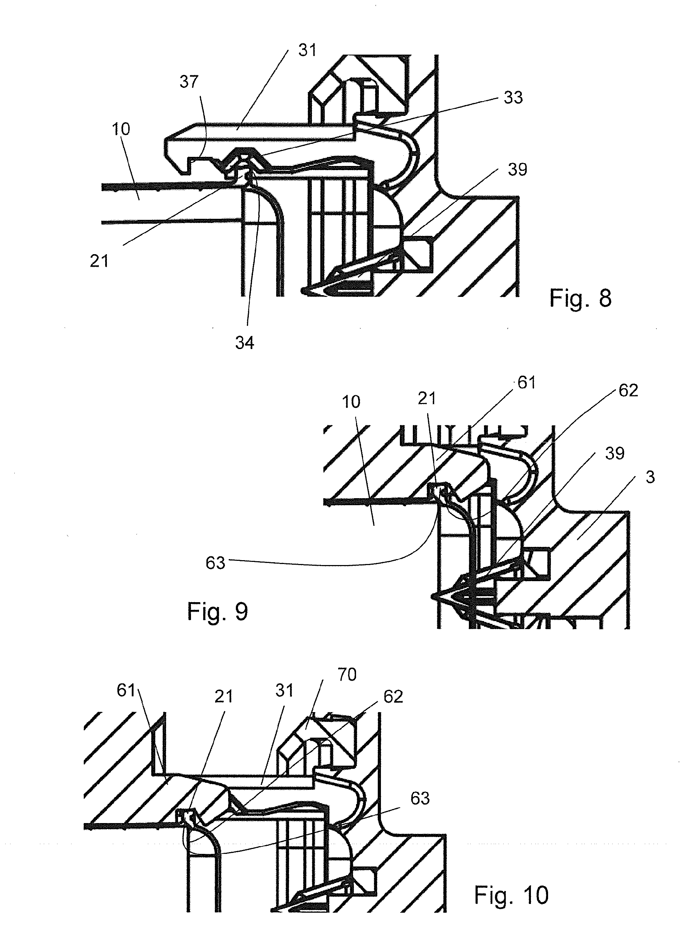

Die Funktionsweise der Haltebacken und das Zusammenwirken mit Rückholelementen 61 des Injektors 5 werden anhand von **Figuren 8 bis 12** eingehender beschrieben.

**Figur 8** zeigt eine Schnittdarstellung des Zustands nach dem Kapseleinwurf. Der Kragen 21 befindet sich in der äusseren Bahn. Oberseitig stützt die äussere Rückhaltestruktur den Kragen und verhindert ein Wegkippen der Kapsel nach unten und innen, d.h. in der gezeichneten Orientierung nach links. Beim Verschliessen der Brühkammer wird der Injektor zur Ausleitvorrichtung hin bewegt und das Rückholelement schiebt sich in die Unterbrechung zwischen die oberen und unteren Führungsbackenteile. Die Kapsel wird - durch eine nachstehend noch eingehender beschriebene Kapseldichtung geführt - ein Stück weit mitgenommen und bspw. durch extraktionsseitige Perforationselemente (Extraktionsdorne 39) schon etwas angestochen (**Figur 9**).

Anschliessend findet der Brühprozess statt, in welchem heisses Wasser unter Druck in die Kapsel eingeleitet und das Extraktionsprodukt extraktionsseitig ausgeleitet wird. Zum Ausleiten kann bspw. eine Anstechvorrichtung 38 verwendet werden, wie sie Gegenstand der europäischen Patentanmeldung 13 185 359.0 ist. Auch andere Anstech- und Ausleitvorrichtungen, bspw. gemäss WO 2010/118544, sind verwendbar.

Beim Öffnen der Brühkammer greift eine Mitnahmepartie 62 des Rückholelements 61 am Kapselkragen 21 an und zieht so die Kapsel von den Extraktionsdornen 39 weg. Weil das Rückholelement im Bereich der Mitnahmepartie 62 weiter nach radial-innen ragt als die äussere Rückhaltestruktur 34 zieht das Rückholelement den Kapselkragen auch über die äussere Bahn hinweg (**Figur 10**). Dabei wird die Kapsel als Ganze leicht deformiert, so dass der - im Allgemeinen vergleichsweise formsteife - Kragen leicht nach radial-innen ausweichen kann. Dies kann dadurch begünstigt sein, dass die Kapsel nach dem Brühprozess im Allgemeinen noch heiss und daher das Kapselmaterial besser deformierbar ist als bei Raumtemperatur. Das Prinzip funktioniert jedoch auch bei erkalteter Kapsel.

Innenseitig der inneren Bahn 36 ist eine innere Rückhaltestruktur 37 ausgeformt. Diese ragt weiter nach radial-innen als die äussere Rückhaltestruktur 34 und/oder ist in einem steileren Winkel zur Achse 20 ausgebildet und/oder ist ausgedehnter und/oder weiter oben/weiter unten angeordnet als die äussere Rückhaltestruktur 34, so dass Rückhaltewirkung (die Kraft, die aufgewendet werden müsste, um die Kapsel mit Gewalt darüber hinwegzuziehen) grösser ist als diejenige der äusseren Rückhaltestruktur 34.

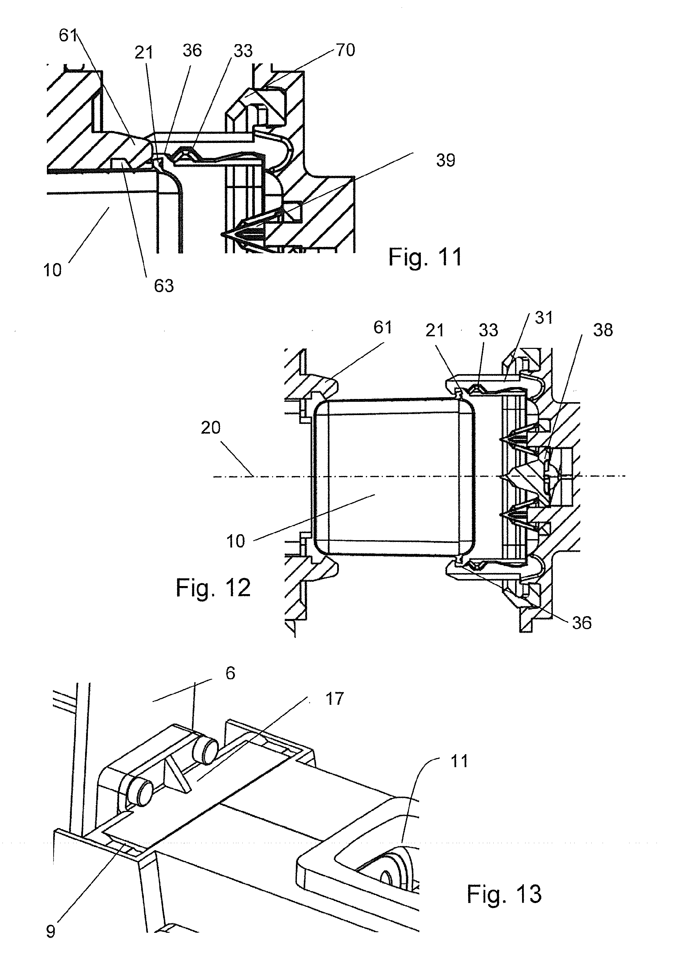

Die Rückhaltewirkung der inneren Rückhaltestruktur 36 ist auch grösser als diejenige (in umgekehrter Richtung wirkende) der Mitnahmepartie 62. Im dargestellten Ausführungsbeispiel kommt das hauptsächlich dadurch zustande, dass die Mitnahmepartie am Mittelteil der Kapsel angreift, die innere Rückhaltestruktur 36 hingegen oberhalb und unterhalb davon und näher bei den Ecken der Kapsel. Da diese einer Deformation der Kapsel als Ganzer mehr Widerstand entgegenbringen als der Mittelteil der Kapsel, weicht letzterer nach innen aus und erlaubt so ein Abrutschen der Mitnahmepartie 62 (**Figur 11**).

Nachdem die von der inneren Rückhaltestruktur 36 zurückgehaltene Kapsel vollständig aus der vom Injektor 5 gebildeten Aufnahme befreit ist (**Figur 12**), kann sie nach unten in einen Kapselbehälter fallen.

Es ist nicht nötig, dass die äussere Bahn 33 wie im illustrierten Beispiel durch nutartige Strukturen definiert ist. Vielmehr reicht es unter Umständen aus, wenn oberseitig eine äussere Rückhaltestruktur 34 vorhanden ist, welche den Kragen 21 von der Innenseite her stützt und so ein Wegkippen der auf der Auflage aufstehenden Kapsel nach innen verhindert. Ergänzend oder alternativ kann die innere Bahn lediglich durch Rückhaltestrukturen der Art der inneren Rückhaltestruktur 36 definiert sein.

Ein Detail des Verschlusskopfes 9 ist in **Figur 13** illustriert. Dieser bildet eine die Schwenkbewegung des Hebels mitmachende Abdeckung 17, durch welche verhindert wird, dass ein Benutzer in die Mechanik der Brüheinheit greifen kann - dadurch wird die Verletzungsgefahr minimiert.

Während des Brühprozesses wird die Kapsel von einer Kapseldichtung des Injektors umgriffen, welche diese auch positionierend hält. Diese Kapseldichtung kann ausgeformt sein wie in WO 2012/045184 beschrieben; auf diese Publikation wird ausdrücklich Bezug genommen.

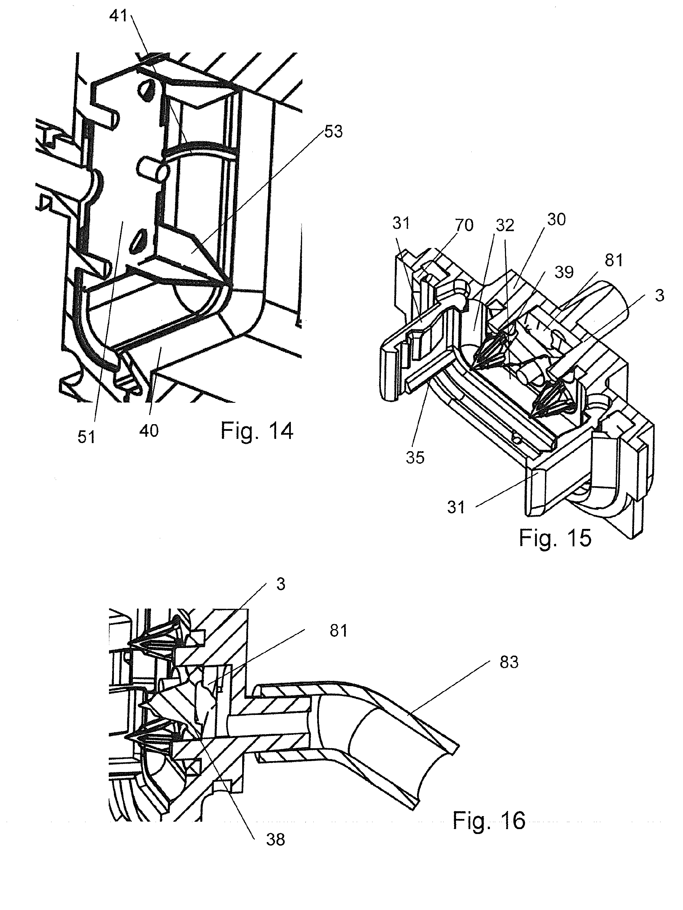

**Figur 14** zeigt das Brühmodul mit einer Kapseldichtung 40 welche in Umsetzung des Prinzips gemäss WO 2012/045184 als Einfach-Lippendichtung ausgebildet ist, die zum Ort der Flüssigkeitsinjektion hin ragend ausgebildet ist, so dass der Flüssigkeitsdruck der von der Injektionsseite eingelassenen Flüssigkeit die Dichtungslippe zusätzlich gegen die Kapsel drückt.

Der Injektor 5 weist eine injektionsseitige Anstechvorrichtung 51 mit einer Mehrzahl von Perforationselementen 53 auf.

Ein besonderes optionales Merkmal des Injektors 5 ist in Figur 14 ebenfalls sichtbar. Dabei handelt es sich um einen Anströmkanal 41, welcher einen Flüssigkeitsfluss hin zur Kapseldichtung 40 begünstigt, auch wenn die Kapsel gegen den Injektor gepresst wird. Durch diese Massnahme wird die Kapseldichtung bereits bevor das Wasser in die Kapsel eingedrungen ist - also vor dem Brühvorgang - angeströmt.

Ein Abdichten der Kapsel 10 gegen die Ausleitvorrichtung funktioniert hier optional ohne separate extraktionsseitige Dichtung. Ein solches Abdichten ist nötig, damit das aus der Kapsel austretende Brühgetränk in den Ausgiesser gelangt und nicht an der Kapsel vorbei nach unten tropfen kann. Im hier beschriebenen Ausführungsbeispiel ist gemäss einem gesonderten Aspekt der Erfindung extraktionsseitig eine auf die Kapselform abgestimmte Dichtfläche 32 vorhanden, gegen welche die Kapsel während des Extraktionsprozesses flächig gedrückt wird. Dabei kann diese Dichtfläche aus einem harten Material - bspw. spritzgegossenem Hartkunststoff oder Metall - gefertigt sein, wobei es die Kapselwand ist, welche während des Brühprozesses verformbarer ist und dichtend gegen die Dichtfläche 32 gedrückt wird.

Ein weiteres optionales Merkmal des Injektors 5 sieht man bspw. in Figuren 1-3. Ein 3/2-Wegeventil 15 ist mit Hilfe einer Geometrie befestigt, die direkt am Injektor angespritzt ist - d.h. das Ventil 15 ist direkt am Injektor vorhanden und nicht wie aus dem Stand der Technik bekannt bspw. über einen Schlauch oder ähnlich mit diesem verbunden. Das 3/2-Wegeventil weist einen pumpenseitigen Anschluss (Eingang), einen injektionsseitigen Anschluss (Ausgang) und einen Tropfwasseranschluss (alternativer Ausgang). Das 3/2-Wegeventil dient wie an sich bekannt der Entlastung des Brühraums. Im nicht betätigten Zustand wird der Brühraum entlastet, indem ein Weg vom injektionsseitigen Anschluss zum Tropfwasseranschluss offen ist. Im betätigten Zustand ist der Weg vom Eingang zum injektionsseitigen Anschluss frei un der Tropfwasseranschluss gesperrt. Nach Beendigung des Brühvorgangs geht das Ventil wieder in den nicht betätigten Zustand über und erlaubt den Druckabbau aus dem injektionsseitigen Anschluss her durch Abtropfen des Wassers in eine Tropfschale. Dabei ist der pumpenseitige Anschluss gesperrt, was auch ein Nachdampfen durch einen plötzlichen Druckabfall nach dem Brühvorgang verhindert.

**Figur 15** zeigt eine Schnittdarstellung der Ausleitvorrichtung. Nebst den bereits vorstehend beschriebenen Elementen sieht man eine Verschlussdichtung 70, welche hier wie die Kapseldichtung 40 als Lippendichtung ausgestaltet ist. Diese liegt im geschlossenen Zustand der Brühkammer an Gehäuse des Injektors 5 an und wird bei Beaufschlagung mit Druck gegen diese gepresst. Dies dichtet die Brühkammer ab und verhindert den Wasseraustritt auch dann, wenn - bspw. für einen Spülvorgang - keine Kapsel eingelegt ist.

Ebenfalls in Figur 15 sichtbar ist eine hinter der extraktionsseitigen Anstechvorrichtung 38 angeordnete flexible Düse 81. Diese kann bspw. aus Silikon oder einem anderen lebensmittelverträglichen und elastischen Material bestehen und eine Düsenöffnung von bspw. Zwischen 0.15 mm und 0.4 mm, insbesondere zwischen 0.2 mm und 0.3 mm aufweisen.

Eine solche Düse hat unter anderem die Wirkung, dass das Brühgetränk zusätzlich aufgeschäumt wird, so dass die Bildung der beliebten "Crema" begünstigt wird.

**Figur 16** zeigt ebenfalls Teile der Ausleitvorrichtung 3 in einer Schnittdarstellung, in welcher nebst der Düse 81 auch der Ausgiesser 83 für das Brühgetränk sichtbar ist. In Figur 18 sieht man auch eine optionale Form der flexiblen Düse 81: diese weist auf der Einlassseite einen zur Düsenöffnung hin zulaufenden Bereich auf, der den Flüssigkeitsfluss kanalisiert.

## Patentansprüche

1. Brühmodul für ein Extraktionsgerät, aufweisend ein erstes Brühmodulteil (3) und ein relativ zu diesem bewegbares zweites Brühmodulteil (5), wobei das erste und das zweite Brühmodulteil eine Ausleitvorrichtung zum Ausleiten eines Extraktionsprodukts aus einer Kapsel (10) mit Extraktionsgut für die Zubereitung von Brühgetränken und einen Injektor zum Einleiten einer Extraktionsflüssigkeit in die Kapsel (10) bilden, wobei das erste Brühmodulteil einen Kopf (30) mit seitlichen Führungsmitteln (31) aufweist, welche eine erste Bahn (33) und eine zweite Bahn (36) für einen Kapselkragen (21) definieren, und wobei das erste Brühmodulteil (3) ferner eine Auflage (35) bildet, welche eine Bewegung der Kapsel (10) nach unten begrenzt, wenn der Kapselkragen sich auf der ersten Bahn befindet, **dadurch gekennzeichnet, dass** die seitlichen Führungsmittel (31) mit dem Kopf verbunden sind und dass das zweite Brühmodulteil ein Rückholmittel (61) aufweist, welches dazu ausgebildet ist, beim Öffnen der Brühkammer am Kapselkragen (21) anzugreifen und diesen in die zweite Bahn (36) zu bewegen.

2. Brühmodul nach Anspruch 1, **dadurch gekennzeichnet, dass** die seitlichen Führungsmittel (31) so angeordnet sind, dass sie bei geschlossener Brühkammer innerhalb der Brühkammer angeordnet sind.

3. Brühmodul nach Anspruch 1 oder 2, **dadurch gekennzeichnet, dass** die seitlichen Führungsmittel (31) bei geschlossener Brühkammer in Kontakt mit der Kapsel (10) sind.

4. Brühmodul nach einem der vorangehenden Ansprüche, **dadurch gekennzeichnet, dass** bei geschlossener Brühkammer die Rückholmittel (61) in Eingriff mit der Kapsel (10) sind.

5. Brühmodul nach einem der vorangehenden Ansprüche, **dadurch gekennzeichnet, dass** die seitlichen Führungsmittel (31) steif mit dem Kopf (30) verbunden sind.

6. Brühmodul nach einem der vorangehenden Ansprüche, **dadurch gekennzeichnet, dass** das Rückholmittel (61) steif mit einem Gehäuse des zweiten Brühmodulteils (5) verbunden ist.

7. Brühmodul nach einem der vorangehenden Ansprüche, **gekennzeichnet durch** eine anschliessend an die zweite Bahn (36) angeordnete zweite Rückhaltestruktur (37).

8. Brühmodul nach einem der vorangehenden Ansprüche, **dadurch gekennzeichnet, dass** die zweite Bahn (36) in Bezug auf die Brühkammer weiter innen angeordnet ist als die erste Bahn (33).

9. Brühmodul nach einem der vorangehenden Ansprüche, **dadurch gekennzeichnet, dass** die seitlichen Führungsmittel (31) pro Seite je zwei Führungsmittelteile aufweisen und die Rückholmittel (61) im geschlossenen Zustand der Brühkammer zwischen die Führungsmittelteile eingreifen.

10. Brühmodul nach einem der vorangehenden Ansprüche, **dadurch gekennzeichnet, dass** der Injektor eine Kapseldichtung (40) aufweist, welche die Kapsel entlang einer umlaufenden Mantelfläche umgreift.

11. Brühmodul nach Anspruch 10, **dadurch gekennzeichnet, dass** die Kapseldichtung (40) eine einzige Dichtungslippe aufweist, welche zu einem Ort der Flüssigkeitsinjektion hin ragend ausgebildet ist.

12. Brühmodul nach Anspruch 9 oder 10, **gekennzeichnet durch** einen Anströmkanal (41) im Injektor, welcher injiziertes Brühwasser schon vor Beginn des Brühprozesses zur Kapseldichtung (40) hin lenkt und die Dichtung gegen die Mantelfläche drücken lässt.

13. Brühmodul nach einem der vorangehenden Ansprüche, **gekennzeichnet durch** eine Mechanik zum Umsetzen einer auslösenden Bewegung in eine Bewegung des zweiten Brühmodulteils (5) relativ zum ersten Brühmodulteil (3), wobei diese Mechanik einen Kniehebel (8) mit zwei Kniehebelarmen (8.1, 8.2) mit je einer äusseren Drehachse und einem gemeinsamen Kniegelenk, wobei das Kniegelenk sich im geschlossenen Zustand der Brühkammer auf einer anderen Seite derjenigen Ebene befindet, welche **durch** die jeweils äusseren Drehachsen der Kniehebelarme (8.1, 8.2) führt als im offenen Zustand der Brühkammer.

14. Extraktionsgerät, aufweisend einen Wassertank oder Wasseranschluss, einen Wassererhitzer, eine Wasserpumpe und ein Brühmodul nach einem der vorangehenden Ansprüche, wobei Wassertank, Wassererhitzer und Wasserpumpe so an das Brühmodul angeschlossen sind, dass von der Pumpe gefördertes erhitztes Wasser durch den Injektor in die Kapsel einleitbar ist.

15. Verfahren zum Brühen eines Brühgetränks unter Verwendung einer mit einem Extraktionsgut gefüllten Kapsel (10) und eines Brühmoduls nach einem der Ansprüche 1 bis 13, aufweisend die Schritte:
• Einwerfen einer Portionenkapsel durch eine Einwurföffnung (11), so, dass ein Kragen (21) der Kapsel auf der ersten Bahn (33) positioniert wird und dass die Kapsel auf der Auflage (35) aufliegt;
• Verschliessen der Brühkammer durch Bewegen des zweiten Brühmodulteils (5) relativ zum ersten Brühmodulteil (3), derart, dass die Kapsel (10) mindestens durch ein Perforationselement eines durch das erste und/oder das zweite Brühmodulteil gebildeten Injektors angestochen wird, wodurch Einleitöffnungen in der Kapsel entstehen;
• Einleiten einer Extraktionsflüssigkeit in die Kapsel durch die Einleitöffnungen;
• Ausleiten einer in der Kapsel entstandenen Extraktionsflüssigkeit aus der Kapsel durch Ausleitöffnungen, die von Perforationselementen einer durch das erste und/oder das zweite Brühmodulteil gebildeten Ausleitvorrichtung erzeugt wurden;
• Anschliessend an das Ausleiten, Öffnen der Brühkammer durch Bewegen des zweiten Brühmodulteils relativ zum ersten Brühmodulteil, wodurch die Kapsel durch die Rückholelemente vom ersten Brühmodulteil weg gezogen wird, bis der Kragen (21) entlang der zweiten Bahn (36) positioniert ist und Fortsetzen des Öffnungsprozesses bis die Kapsel (10) aus der geöffneten Brühkammer nach unten fällt.
